# FASCICULE DE BREVET EUROPEEN

(11) **EP 3 427 972 B1**
(45) Date de publication et mention de la délivrance du brevet: **29.01.2020**
(21) Numéro de dépôt: 18182596.9
(22) Date de dépôt: 10.07.2018
(51) Int. Cl.: B60B 3/14

(54) **ASSEMBLAGE DE ROUES DE RADIATEUR DOMESTIQUE**
ZUSAMMENBAU DER ROLLEN EINES HAUSHALTSHEIZKÖRPERS
DOMESTIC RADIATOR WHEEL ASSEMBLY

(30) Priorité: 10.07.2017 FR 1756502
(43) Date de publication de la demande: 16.01.2019
(73) Titulaire: Texas De France, 13854 Aix en Provence (FR)
(72) Inventeur: VIENNET, Raphaël, 13100 Aix en Provence (FR); BLOUIN, Philippe, 13510 Eguilles (FR)
(74) Mandataire: Roman, Alexis

(56) Documents cités:
- EP-A1- 2 719 548
- DE-A1- 3 811 757
- DE-U1- 9 302 543
- DE-U1-202005 013 849
- US-A- 2 978 277
- US-B1- 8 608 253

## Description

### Domaine technique de l'invention.

L'invention a pour objet un assemblage de roues de radiateur domestique et un radiateur électrique équipé d'un tel assemblage.

Elle concerne le domaine technique des radiateurs domestiques, et plus particulièrement des radiateurs électriques.

### État de la technique.

Les radiateurs domestiques peuvent être fixes, par exemple fixés contre une paroi ou un mur d'un local (bureau, habitation, ...) ou mobiles. Dans ce dernier cas, on parle de radiateurs d'appoint, que l'utilisateur peut déplacer d'une pièce à une autre, selon ses besoins.

De tels radiateurs d'appoint peuvent être équipés de roues de manière à faciliter leurs déplacements. Généralement, le dispositif d'assemblage de ces roues comprend un essieu cylindrique monté mobile en rotation sur le châssis du radiateur et aux extrémités duquel sont fixées des roues, éventuellement par l'intermédiaire d'un moyeu. Les roues sont généralement attachées rigidement à l'essieu et tournent en même temps, de sorte que la maniabilité de l'ensemble n'est pas bonne, surtout lors de déplacements en virage.

Pour améliorer la maniabilité, des assemblages permettent aux roues de tourner indépendamment l'une de l'autre. Ces assemblages sont toutefois généralement complexes en ce sens qu'ils nécessitent un nombre important de pièces, ce qui les rend relativement couteux. Plusieurs de ces pièces peuvent nécessiter l'emploi d'outils, ce qui rend difficile, pour un utilisateur, de les monter lui-même. En outre, à l'usage, les roues peuvent avoir tendance à se vriller, provoquant des frottements qui gênent le roulement et/ou dégradent la maniabilité.

Les documents brevets DE9302543U1 et DE3811757A1, divulguent un assemblage de roues selon le préambule de la revendication principale annexée. Après assemblage, l'essieu reste mobile en rotation par rapport au châssis. Le moyeu est lui aussi monté mobile en rotation sur l'essieu après emboîtage. Et chaque roue est fixée sur le moyeu respectif après emboîtage, sans possibilité de rotation. Les assemblages décrits dans ces documents brevets sont relativement complexes et coûteux et génèrent des frottements importants entre d'une part l'essieu et le châssis, et d'autre part entre le moyeu et l'essieu.

L'invention vise à remédier à cet état des choses. En particulier, un objectif de l'invention est de proposer un assemblage qui permette une rotation indépendante de chaque roue, dont la conception est simple et fiable, dont le coût de revient est faible, avec lequel les frottements sont réduits, et qui puisse être facilement monté par l'utilisateur final du radiateur.

### Divulgation de l'invention.

La solution proposée par l'invention est un assemblage de roues de radiateur domestique, comprenant :
- un essieu adapté pour être assemblé à un châssis du radiateur, lequel essieu présente deux extrémités,
- un moyeu monté à chacune des extrémités de l'essieu, chaque moyeu étant assemblé par emboîtage élastique sur une extrémité respective dudit essieu,
- une roue montée sur chacun des moyeux, chaque roue étant assemblée par emboîtage élastique sur le moyeu respectif.

Cette assemblage est remarquable en ce que :
- l'essieu est attaché rigidement au châssis après assemblage,
- chaque moyeu est attaché rigidement à l'essieu après emboîtage,
- chaque roue est mobile en rotation autour du moyeu respectif après emboîtage.

Les emboîtages élastiques permettent non seulement de réduire le nombre de pièces, mais celles-ci ne nécessitent aucun outillage spécifique pour leur montage. Aussi, l'utilisateur final du radiateur peut facilement et rapidement effectuer le montage lui-même. En outre, les seules pièces susceptibles de tourner sont les roues, ce qui fiabilise l'assemblage, réduit les frottements, et diminue les risques de vrillage.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Avantageusement, l'essieu se présente sous la forme d'un rail plat longitudinal pourvu d'un trou d'encliquetage aménagé au niveau de chacune de ses extrémités ; chaque moyeu comprend un détrompeur formant glissière à l'intérieur duquel se loge une extrémité respective de l'essieu ; le détrompeur est pourvu d'un organe d'encliquetage qui s'emboîte élastiquement dans le trou d'encliquetage lorsque l'extrémité de l'essieu est logée dans ledit détrompeur.
- Avantageusement, chaque moyeu comprend un tube creux autour duquel est assemblée la roue respective ; le détrompeur est délimité par un agencement de parois qui s'étendent à l'intérieur du tube creux.
- Avantageusement, chaque moyeu comprend un tube creux autour duquel est assemblée la roue respective et à l'intérieur duquel est aménagé le détrompeur ; le tube creux présentant deux extrémités : une première extrémité ouverte par laquelle l'extrémité respective de l'essieu s'insère dans le détrompeur, et une seconde extrémité obturée par une paroi qui délimite le fond dudit détrompeur ; l'organe d'encliquetage adapté pour s'emboîter élastiquement dans le trou d'encliquetage du rail formant l'essieu, est solidaire de la paroi de fond.
- Le rail formant l'essieu peut présenter une âme longitudinale dont chacun des bords longitudinaux est pourvu d'une aile, de sorte que ledit rail a une section transversale en forme de U.
- Cette âme présente avantageusement une platine pour la fixation du châssis du radiateur.
- Selon un mode de réalisation avantageux, l'essieu se présente sous la forme d'un rail plat longitudinal métallique ; chaque moyeu comprend un tube creux en plastique autour duquel est assemblée la roue respective et dans lequel est aménagé un détrompeur formant glissière à l'intérieur duquel se loge une extrémité respective de l'essieu ; le tube creux présente deux extrémités : une première extrémité ouverte qui délimite l'amorce du détrompeur et par laquelle l'extrémité respective de l'essieu s'insère, et une seconde extrémité obturée par une paroi qui délimite le fond du détrompeur ; chaque extrémité respective de l'essieu pénètre sur toute la longueur du tube creux, depuis la première extrémité ouverte jusqu'à la seconde extrémité obturée.
- Avantageusement, chaque moyeu comprend un tube délimité par une paroi cylindrique autour de laquelle est assemblée la roue respective, ladite paroi cylindrique présentant une face externe ; au moins une patte flexible est aménagée au niveau de la face externe de la paroi cylindrique, laquelle patte est pourvue d'un élément d'encliquetage ; l'élément d'encliquetage fait saillie au-delà de la face externe de la paroi cylindrique lorsque la patte flexible n'est pas sollicitée ; la patte flexible est adaptée pour s'escamoter dans la paroi cylindrique ; chaque roue présente un alésage axial qui s'insère autour de la paroi cylindrique du moyeu respectif ; l'élément d'encliquetage de la patte flexible est conformé de manière à : provoquer l'escamotage de la patte flexible dans la paroi cylindrique lors de l'insertion de l'alésage axial autour de ladite paroi cylindrique, et venir en butée contre une bordure de l'alésage axial de la roue lorsque ledit alésage est inséré autour de la paroi cylindrique, empêchant le démontage de ladite roue du moyeu respectif.
- Avantageusement, chaque moyeu comprend un tube délimité par une paroi cylindrique autour de laquelle est assemblée la roue respective, ladite paroi cylindrique présentant une face externe ; le tube creux présente deux extrémités : une première extrémité ouverte dans laquelle s'emboîte élastiquement une extrémité respective de l'essieu, et une seconde extrémité par laquelle s'emboîte la roue respective ; la première extrémité présente une collerette radiale qui s'étend depuis la face externe de la paroi cylindrique ; chaque roue présente un alésage axial qui s'insère autour de la paroi cylindrique du moyeu respectif, la collerette radiale empêchant l'insertion dudit alésage axial au-delà de la première extrémité.
- Cette collerette radiale est préférentiellement circulaire et présente un diamètre qui est supérieur au diamètre externe de la roue, ladite collerette étant pourvue d'une bande de protection qui recouvre en partie ladite roue lorsque celle-ci est assemblée au moyeu respectif.
- Le tube, la collerette et la bande de protection se présentent préférentiellement sous la forme d'une pièce monobloc obtenue par moulage plastique.
- Un enjoliveur peut être assemblé par emboîtage élastique sur chacune des roues.

Un autre aspect de l'invention concerne un radiateur électrique domestique d'appoint comportant un châssis et des roues, lesdites roues étant assemblées sur ledit châssis au moyen d'un assemblage conforme à l'une des caractéristiques précédentes.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue en perspective d'un radiateur conforme à l'invention,
- la figure 2 montre le radiateur de la figure 1 avec un assemblage de roues conforme à l'invention en vue éclatée,
- la figure 3 est une vue éclatée d'un assemblage de roues conforme à l'invention,
- la figure 4 est montre un assemblage de roues conforme à l'invention, à l'état assemblé,
- la figure 5 montre différentes vues d'un essieu conforme à l'invention,
- la figure 6 montre différentes vues d'un moyeu conforme à l'invention,
- la figure 7 montre différentes vues d'une roue conforme à l'invention,
- la figure 8 montre différentes vues d'un enjoliveur conforme à l'invention,
- la figure 9A est en coupe selon A-A de l'assemblage de roues selon la figure 4,
- la figure 9B est en coupe selon B-B de l'assemblage de roues selon la figure 4.

### Modes préférés de réalisation de l'invention.

Dans la suite de la description, les termes « *supérieur(e)*/*inférieur(e) », droit(e)*/*gauche », « haut*/*bas », « avant*/*arrière » « horizontal(e)*/*vertical(e)* » et de manière générale les termes désignant une référence spatiale, concernent la position dans laquelle les éléments apparaissent sur les figures annexées. Cette position peut toutefois être différente après l'installation du radiateur.

Par souci de clarté, les précisions suivantes sont apportées à certains termes utilisés dans la description et les revendications :
- *« Emboîtage élastique* » peut être compris de façon non limitative comme encliquetage, assemblage par clip, et couvre de manière générale tout mode d'assemblage où les éléments sont déformés lors de l'introduction. Après assemblage, les éléments ne peuvent plus être séparés. Un jeu entre les éléments peut exister une fois assemblés.
- « *Radiateur»* peut être compris de façon non limitative comme : radiateur électrique, radiateur à bain d'huile, radiateur à fluide chaud, radiateur à gaz, radiateur à air pulsé, etc.
- *« Domestique»* peut être compris de façon non limitative comme concernant le domicile d'un utilisateur (habitation, bureau, local professionnel, ...).
- « *Pièces attachées rigidement* » signifie que les pièces sont solidaires l'une de l'autre, sans mouvement relatif. Toutefois, un jeu fonctionnel peut exister.

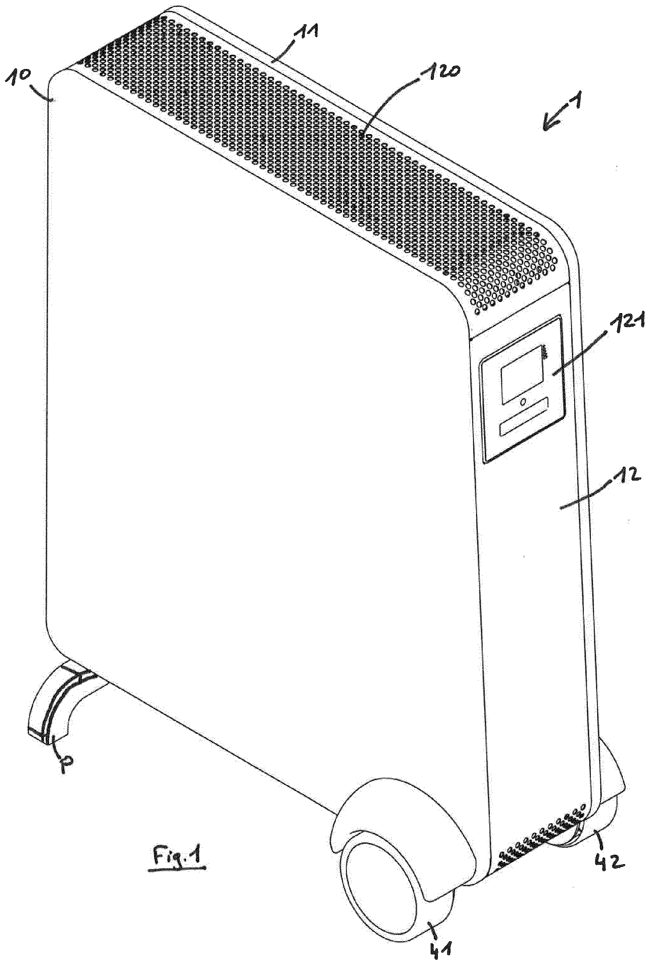

Sur la figure 1, le radiateur 1 comprend une façade avant 10 et une façade arrière 11 fixées de part et d'autre d'un châssis 12, l'ensemble délimitant un logement interne dans lequel est disposé un module chauffant (non représenté).

Les façades 10 et 11 peuvent consister en des tôles métalliques ou des plaques de verre réalisées d'un seul tenant ou en plusieurs parties. Les façades 10, 11 sont chauffées par le module chauffant. Ce dernier peut consister en une résistance électrique avec ou sans dissipateur thermique, un cœur de chauffe en pierre, fonte, aluminium, etc. Avantageusement, des aérations 120, disposées dans la partie supérieure du châssis 12, permettent une convection naturelle de la chaleur émise par le module chauffant.

Le châssis 12 consiste préférentiellement en une tôle métallique pliée et/ou emboutie et sur laquelle sont fixées la façade avant 10 et la façade arrière 11, par exemple par vissage ou rivetage. Le châssis 12 peut être pourvu, dans sa partie inférieure, d'entrées d'air qui contribuent à assurer une convection naturelle à l'intérieur du radiateur 1. La façade avant 10, la façade arrière 11 et le châssis 12 délimitent un logement interne dans lequel est installé le module chauffant 2.

Un boîtier électronique de gestion 121 peut être installé sur le châssis 12, au niveau d'une réservation prévue à cet effet. Ce boîtier 120 est adapté pour contrôler le fonctionnement du module chauffant et permet notamment de contrôler la température de chauffage (thermostat) et/ou des plages de fonctionnement (programmateur).

Sur la figure 1, le radiateur 1 est pourvu d'une paire de roues 41, 42 situées au niveau de la partie avant basse du châssis 12. La partie arrière basse du châssis 12 est quant à elle pourvue d'un pied P assurant la stabilité du radiateur 1. Ce pied P pourrait toutefois être remplacé par une autre paire de roues.

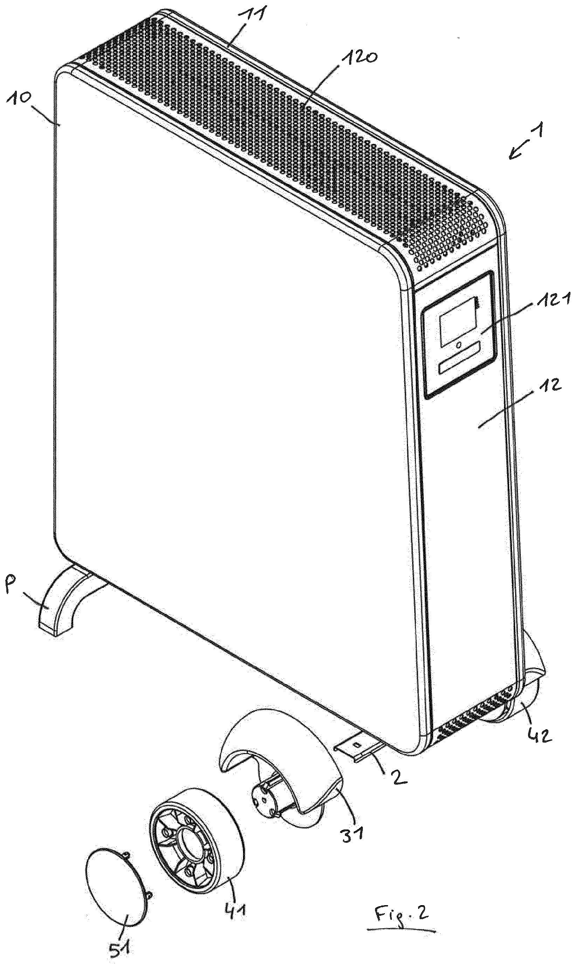

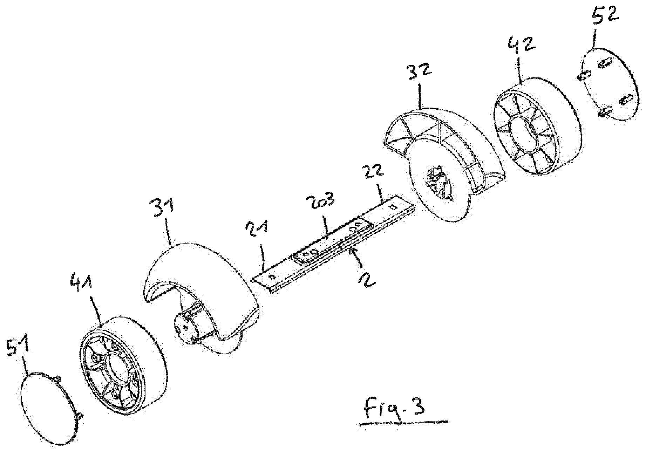

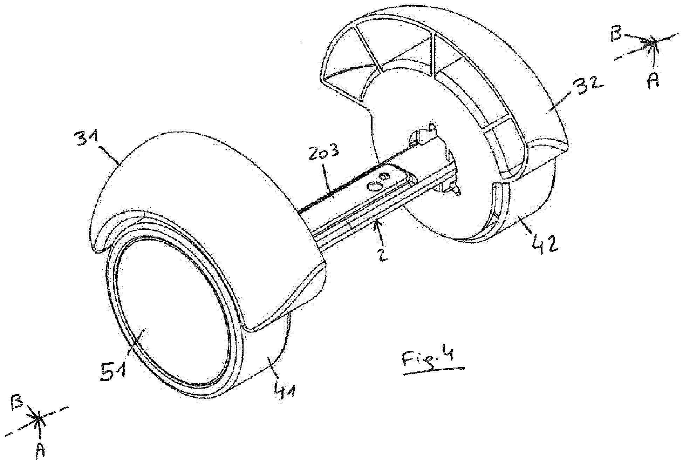

La figure 2 montre différents éléments constitutifs du dispositif d'assemblage de la roue 41. Cet assemblage comprend un essieu 2, un moyeu 31, la roue 41 et un enjoliveur 51. En se rapportant plus particulièrement à la figure 3, l'essieu 2 présente deux extrémités 21 et 22. Un moyeu 31 est monté au niveau de l'extrémité gauche 21 et un autre moyeu 32 est monté au niveau de l'extrémité droite 22. Chaque roue 41 et 42 est montée sur un moyeu, respectivement 31 et 32. Un enjoliveur 51, 52 est enfin assemblé sur chacune des roues 41, 42. Une fois ces éléments assemblés, l'ensemble est compact, son encombrement étant particulièrement réduit (figure 4).

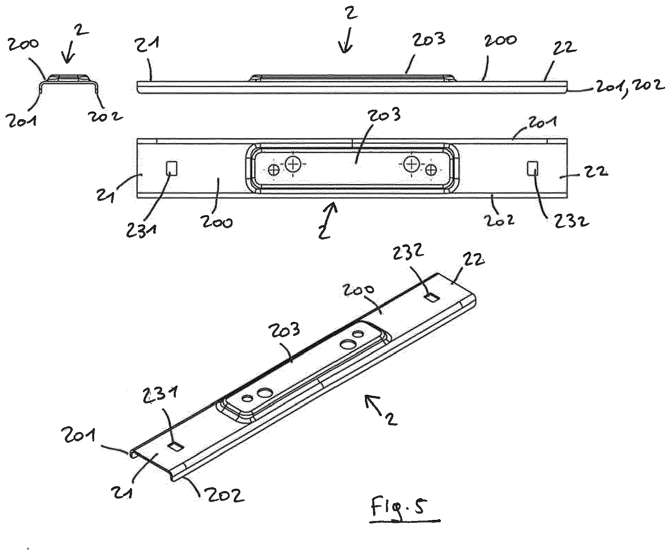

Sur la figure 5, l'essieu 2 se présente sous la forme d'un rail plat longitudinal. Ce rail peut être réalisé en plastique, ou préférentiellement en métal pour lui conférer davantage de rigidité. Il peut être obtenu par moulage ou par emboutissage. A titre d'exemple, sa longueur est comprise entre 10 cm et 40 cm, et sa largeur comprise entre 1 cm et 6 cm. Son épaisseur est par exemple comprise entre 1 mm et 5 mm.

Le rail 2 présente une âme longitudinale 200 dont chacun des bords longitudinaux est pourvu d'une aile 201, 202, de sorte que ledit rail a une section transversale en forme de U. Les ailes 201, 202 s'étendent depuis la face inférieure de l'âme 200. Cette configuration offre davantage de rigidité à l'essieu 2, notamment en termes de flexion, permettant d'utiliser un rail de faible épaisseur.

Au moins un trou d'encliquetage 231, 232 est aménagé au niveau de chacune des extrémités 21, 22. Ces trous d'encliquetage 231, 232 se présentent sous la forme de découpe débouchant de part et d'autre des faces inférieure et supérieure de l'âme 200. Ces trous sont obtenus par enlèvement de matière, par exemple par usinage ou poinçonnage. Pour simplifier la conception du rail 2, leur forme est carrée ou rectangulaire, leurs côtés ayant par exemple une longueur comprise entre 2 mm et 15 mm.

La face supérieure de l'âme 200 est pourvue d'une platine de fixation 203. Cette dernière permet de fixer l'essieu 2 sur la face inférieure du châssis 12 (figure 2). Cette fixation peut être obtenue par vissage ou rivetage. Une solution par soudage ou encliquetage est toutefois envisageable.

Lorsque l'essieu 2 est assemblé au châssis 12, il est attaché rigidement à ce dernier, c'est-à-dire qu'il n'y a pas de mouvement relatif entre ces deux pièces. L'essieu 2 est orienté perpendiculairement aux faces 10, 11 du radiateur 1, de sorte que, comme cela apparaît sur la figure 2, après assemblage les extrémités 21 et 22 dépassent desdites faces, sur une longueur de 2 cm à 10 cm par exemple. Comme expliqué plus avant dans la description, ce dépassement permet la fixation des moyeux 31, 32.

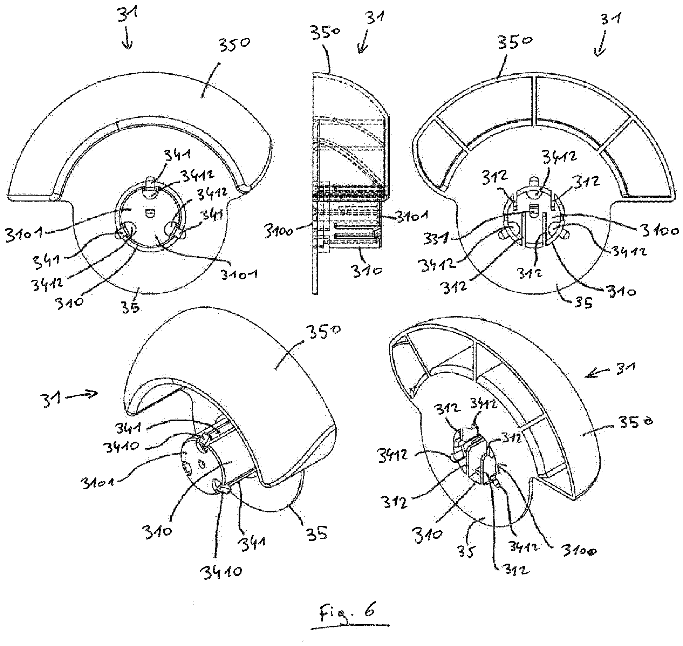

Sur la figure 6, seul le moyeu 31 est représenté. Le moyeu 32 étant toutefois identique, il ne sera pas décrit par souci de concision. Pour limiter les coûts de fabrication et simplifier sa conception, le moyeu 31 est préférentiellement réalisé en matière plastique, par exemple en ABS, et obtenu par moulage. Tous les éléments constitutifs du moyeu sont obtenus lors du moulage de ce dernier, l'ensemble formant une pièce monobloc.

Le moyeu 31 comprend un tube creux 310 autour duquel est assemblée la roue 41. Le tube 310 est délimité par une paroi cylindrique présentant une face interne et une face externe. Le tube 310 présente une première extrémité ouverte 3100 et une seconde extrémité 3101 avantageusement obturée par une paroi. La seconde extrémité 3101 peut toutefois être ouverte. A titre d'exemple, le diamètre externe du tube 310 est compris entre 2 cm et 15 cm, sa longueur comprise entre 1 cm et 10 cm et l'épaisseur de sa paroi comprise entre 1 mm et 5 mm.

Le tube 310 comprend une empreinte - ou détrompeur - formant glissière, située à l'intérieur dudit tube. Sur la figure 6, ce détrompeur est délimité par un agencement de parois 312 qui s'étendent verticalement à l'intérieur du tube 310et qui sont parallèles entre elles. Une première paire de parois 312 s'étend depuis le bas de la face interne de la paroi cylindrique du tube 310, et une seconde paire s'étend depuis le haut de ladite face interne. Ces parois 312 s'étendent également dans toute la longueur du tube 310, depuis la première extrémité ouverte 3100 qui délimite l'amorce du détrompeur, jusqu'à la seconde extrémité fermée 3101 qui délimite le fond dudit détrompeur.

L'écartement entre les parois 312 de la première paire est inférieur à l'écartement entre les parois 312 de la seconde paire. Les extrémités libres des parois 312 de la première paire sont situées en dessous des extrémités libres des parois 312 de la seconde paire, de manière à ménager un espace entre ces extrémités libres. Cet espace permet l'insertion des extrémités 21, 22 du rail formant l'essieu 2, comme cela est expliqué plus avant dans la description. La délimitation du détrompeur par ces parois 312 est particulièrement avantageuse. En effet, ces parois 312 non seulement rigidifient le tube creux 310, mais permettent également de réduire la matière nécessaire à la délimitation du détrompeur, réduisant de ce fait le poids et les coûts du moyeu 31.

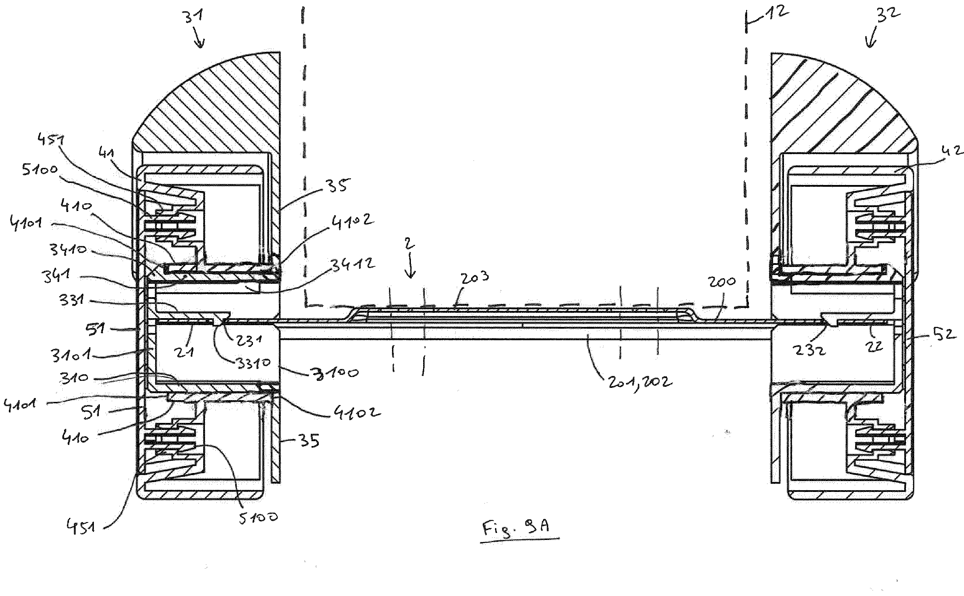

En se rapportant aux figures 6 et 9A, le détrompeur est pourvu d'un organe d'encliquetage 331. Ce dernier s'emboîte élastiquement dans le trou d'encliquetage 231 lorsque l'extrémité 21 de l'essieu 2 est logée dans ledit détrompeur. L'organe d'encliquetage 331 se présente sous la forme d'une patte flexible, qui s'étend à l'intérieur du tube 310, parallèlement à l'axe dudit tube, et parallèlement à l'âme 200 de l'essieu 2. Une extrémité de la patte d'encliquetage 331 est assemblée fixement à la paroi de fond 3101. L'autre extrémité de la patte d'encliquetage 331, c'est-à-dire l'extrémité qui est la plus proche de l'extrémité ouverte 3100, est libre et pourvue d'un élément d'encliquetage 3310 qui peut se présenter sous la forme d'un crochet inversé. Ce crochet 3310 comprend une surface de contact inclinée dans le sens de l'insertion de l'extrémité 21 de l'essieu 2 dans le détrompeur du moyeu 31 et une surface de contact normale au sens de sortie dudit essieu.

L'extrémité 21 de l'essieu 2 s'insère par l'extrémité ouverte 3100 du tube 310, au niveau de l'espace ménagé par les extrémités libres des parois 312. Le détrompeur forme une glissière guidant la translation de l'extrémité 21 durant son insertion. L'âme 200 de l'essieu 2 s'insère axialement dans l'espace ménagé entre les extrémités libres des parois 312, les ailes 201, 202 étant situées de part et d'autre des parois 312 de la première paire. Lors de cette insertion, la surface de contact inclinée du crochet 3310 glisse sur la face supérieure de l'âme 200 de l'essieu 2, de sorte que la patte d'encliquetage 331 se relève automatiquement, en pivotant vers le haut, autour de l'extrémité fixée sur la paroi de fond 3101. Au moment où le trou d'encliquetage 231 atteint le crochet 3310 inversé (en pratique lorsque l'extrémité 21 atteint le fond 3101 du détrompeur), ledit crochet, par un effet ressort de la patte d'encliquetage 331, se verrouille automatiquement dans ledit trou. La surface de contact normale bloque la sortie de l'extrémité 21 de sorte que le moyeu 31 est attaché rigidement à l'essieu 2 après emboîtage. Bien évidemment, le moyeu 32 s'assemble de la même façon sur l'extrémité 22 de l'essieu 2. Les moyeux 31, 32 étant fixes par rapport à l'essieu 2, il n'y a aucun frottement entre ces pièces lors du déplacement du radiateur 1.

La combinaison des moyeux 31, 32 en matière plastique avec l'essieu 2 en métal est particulièrement avantageuse. La pénétration des extrémités 21, 22 de l'essieu 2 sur toute la longueur du tube 310, depuis la première extrémité ouverte 3100 jusqu'au fond 3101 dudit tube, élimine tout risque de porte-à-faux qui générerait des contraintes mécaniques importantes sur les moyeux31, 32. Les moyeux 31, 32 subit principalement des forces de compression qui génèrent des contraintes relativement faibles. En outre, étant donné que les parois 312 s'étendent dans toute la longueur du tube 310, elles font offices de renforts et permettent de transférer à l'essieu 2 les principales forces de compression exercées sur les moyeux 31, 32. Les moyeux 31, 32 en matière plastique (intrinsèquement plus fragile et plus souple que le métal), acquière ainsi la solidité et la rigidité de l'essieu 2 en métal.

Sur la figure 6, la face externe de la paroi cylindrique du tube 310, comprend au moins une patte flexible 341 pourvue d'un élément d'encliquetage 3410. Préférentiellement, trois pattes flexibles 341, disposées à 120°, sont aménagées au niveau de la face externe de la paroi cylindrique.

Chaque patte flexible 341 s'étend parallèlement à l'axe du tube 310. Des évidements 3412 en forme de rainures longitudinales sont réalisés dans la longueur de la paroi du tube 310. Ces évidements 3412 servent de logements aux pattes flexibles 341, de sorte que ces dernières viennent en affleurement de la paroi du tube 310 lorsqu'elles ne sont pas sollicitées. Comme expliqué plus avant dans la description, lorsque les pattes flexibles 341 sont sollicitées, les évidements 3412 leur permettent de s'escamoter dans la paroi du tube 310.

Chaque patte flexible 341 comprend une extrémité assemblée fixement sur une collerette radiale 35 qui s'étend depuis la face externe de la paroi cylindrique, dans le prolongement de l'extrémité ouverte 3100 du tube 310 (figure 9A). L'autre extrémité est libre, et située au niveau de l'extrémité fermée 3101 du tube 310. Cette extrémité libre est pourvue d'un élément d'encliquetage 3410 qui peut se présenter sous la forme d'un crochet. Ce crochet 3410 comprend une surface de contact inclinée dans le sens de l'insertion de la roue 41 et une surface de contact normale au sens de sortie de ladite roue. Le crochet 3410 fait saillie au-delà de la face externe de la paroi cylindrique du tube 310 lorsque la patte flexible 341 n'est pas sollicitée, et peut s'escamoter en tout ou partie dans l'évidement respectif 3412 lorsque ladite patte est sollicitée.

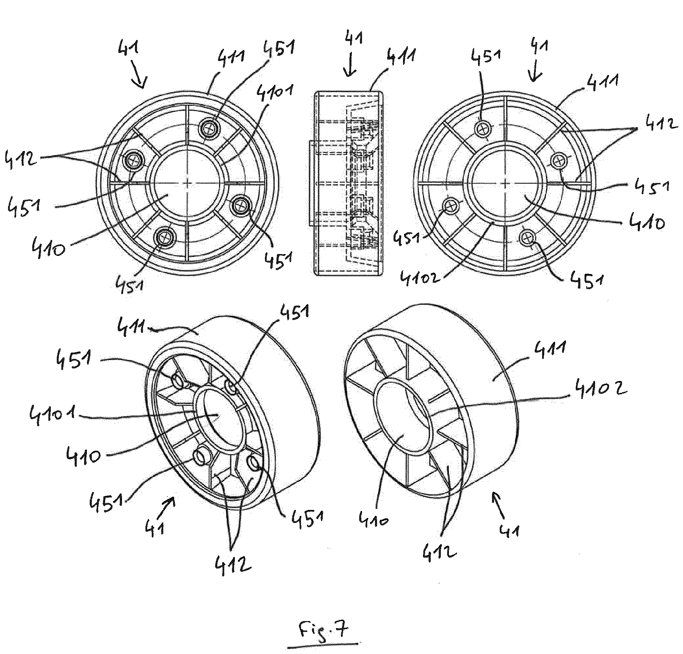

Sur la figure 7, seule la roue 41 est représentée. La roue 42 étant toutefois identique, elle ne sera pas décrite par souci de concision. Pour limiter les coûts de fabrication et simplifier sa conception, la roue 31 est préférentiellement réalisée en matière plastique, par exemple en ABS, et obtenu par moulage. Tous les éléments constitutifs de la roue sont obtenus lors du moulage de cette dernière, l'ensemble formant une pièce monobloc.

Chaque roue 41, 32 est assemblée par emboîtage élastique sur le moyeu respectif 31, 32. Plus particulièrement, la roue 41 s'insère autour de la paroi cylindrique du tube 310 du moyeu respectif 31. La roue 41 a une forme générale cylindrique. Elle présente une bande de roulement 411 et un alésage axial 410 débouchant de chaque côté de la roue 41. L'alésage axial 410 présente une bordure proximale 4101 et une bordure distale 4102. Dans le but de limiter la quantité de matière et réduire le poids de la roue 41, des nervures de rigidification radiales 412 relient la bande de roulement 411 à l'alésage interne 410.

A titre d'exemple, le diamètre externe de la bande de roulement 411 est compris entre 2 cm et 20 cm, sa largeur comprise entre 1 cm et 10 cm, et son épaisseur comprise entre 1 mm et 5 mm. Toujours à titre d'exemple, le diamètre interne de l'alésage 410 est compris entre 2 cm et 15 cm, sa largeur comprise entre 1 cm et 10 cm, et son épaisseur comprise entre 1 mm et 5 mm. Le diamètre interne de l'alésage 410 est avantageusement légèrement plus grand que le diamètre externe du tube 310, par exemple de 0,1 mm à 2 mm, pour que ledit alésage puisse s'insérer sans force autour de la paroi cylindrique dudit tube.

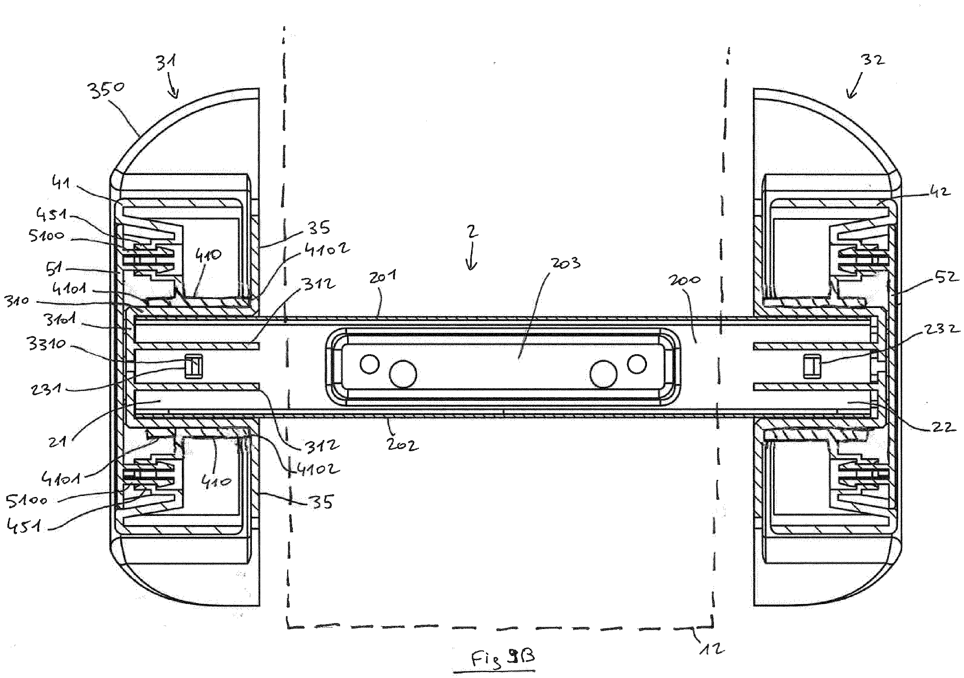

En se rapportant aux figures 9A et 9B, la roue 41 s'emboîte axialement par l'extrémité fermée 3101 du tube 310, son alésage axial 410 s'insérant autour de la paroi cylindrique dudit tube, depuis sa bordure distale 4102. Lors de cette insertion, la surface de contact inclinée des crochets 3410 glisse sous la face inférieure de l'alésage 410, de sorte que la patte d'encliquetage 341 s'escamote dans l'évidement respectif 3412. Au moment où la bordure proximale 4101 de l'alésage 410 dépasse le crochet 3410, ce dernier, par un effet ressort de la patte d'encliquetage 341, vient en butée contre ladite la bordure proximale 4101. La surface de contact normale du crochet 3410 bloque ainsi tout retrait de la roue 41 après son emboîtage sur le moyeu 31. Etant donné que la surface interne de l'alésage 410 et la surface externe du tube 310 sont cylindriques et coaxiales, la roue 41 peut librement tourner autour dudit tube. Bien évidemment, la roue 42 s'emboîte de la même façon sur le moyeu 32. Les roues 31, 32 sont donc capables de tourner indépendamment l'une de l'autre, conférant une bonne maniabilité au radiateur 1.

La collerette radiale 35 empêche l'insertion de l'alésage 410 au-delà de la première extrémité 3100. La translation axiale de la roue 31 est ainsi bloquée d'un côté par le crochet 3410 et de l'autre côté par la collerette 35. Sur les figures annexées, cette collerette 35 est circulaire et présente un diamètre qui est supérieur au diamètre externe de la roue 41 (figures 9A et 9B), c'est-à-dire supérieure au diamètre externe de la bande de roulement 411, par exemple supérieur de 0,5 cm à 2 cm. Sur les figures 6, 9A et 9B, la collerette 35 est pourvue d'une bande de protection 350 qui recouvre en partie la roue 41, 42 lorsque celle-ci est assemblée au moyeu respectif 31, 32. La collerette 35 pourrait toutefois avoir un diamètre moindre et/ou être dépourvue de bande de protection.

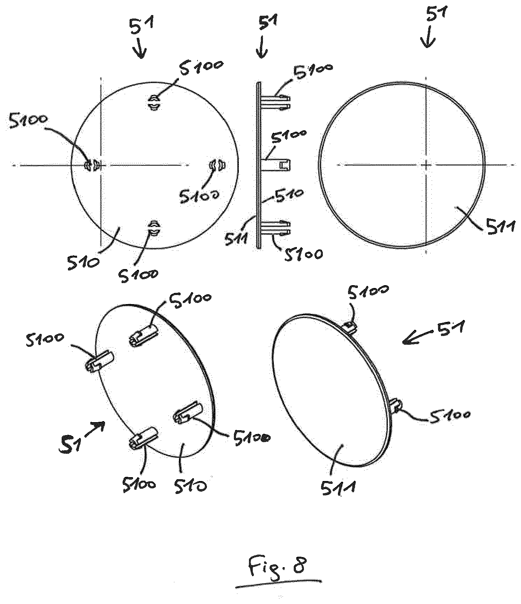

Sur la figure 8, seul l'enjoliveur 51 est représenté. L'enjoliveur 52 étant toutefois identique, il ne sera pas décrit par souci de concision. Pour limiter les coûts de fabrication et simplifier sa conception, l'enjoliveur 51 est préférentiellement réalisé en matière plastique, par exemple en ABS, et obtenu par moulage. Tous les éléments constitutifs de l'enjoliveur sont obtenus lors du moulage de ce dernier, l'ensemble formant une pièce monobloc.

L'enjoliveur 51 se présente sous la forme d'un disque plein qui s'assemble par emboîtage élastique sur la roue 41. Il présente une face interne 510 et une face externe 511. Son diamètre correspond au diamètre interne de la bande de roulement 411 de la roue 41, l'épaisseur de sa paroi étant comprise entre 1 mm et 5 mm.

La face interne 510 est pourvue d'une ou plusieurs pattes d'encliquetage 5100. Ces dernières se présentent sous la forme de goupilles fendues longitudinalement pour leur conférer de l'élasticité. Ces goupilles s'étendent perpendiculairement à la face interne 510, sur une distance par exemple comprise entre 0,5 cm et 5 cm. Une extrémité des goupilles 5100 est solidaire de la face interne 510, l'autre extrémité, libre, est pourvu d'un élément d'encliquetage se présentant sous la forme d'un double crochet comprenant une surface de contact inclinée dans le sens de l'insertion de l'enjoliveur 51 et une surface de contact normale au sens de sortie dudit enjoliveur. Ces pattes d'encliquetage 5100 sont adaptées pour s'insérer dans des alésages 451 complémentaires aménagés dans la roue 41 (figure 7).

En se rapportant aux figures 9A et 9B, l'enjoliveur 51 s'emboîte sur la roue 41 en insérant les pattes d'encliquetage 5100 dans les alésages 451 de ladite roue. Lors de cette insertion, la surface de contact inclinée des crochets des pattes 5100 glisse à l'intérieur des alésages 451, de sorte que les goupilles fendues se replient sur elles-mêmes - ou se compriment. Au moment où les crochets sortent de l'alésage 451, les goupilles, par un effet ressort, se détendent et reviennent à leur état initial de sorte que lesdits crochets viennent en butée contre un épaulement aménagé dans ledit alésage. La surface de contact normale des crochets bloque ainsi tout retrait de l'enjoliveur 51 après son emboîtage sur la roue 41. Bien évidemment, l'enjoliveur 52 s'emboîte de la même façon sur la roue 42.

L'enjoliveur 51 et la bande de protection 350 du moyeu 31, se combinent pour protéger physiquement la roue 41, notamment contre les chocs et les poussières, réduisant et/ou ralentissant l'encrassement de ladite roue au niveau de son emboîtage sur le tube 310.

Lorsque le radiateur est livré à un utilisateur, les moyeux 31, 32, les roues 41, 42, et les enjoliveurs 51, 52 se présentent en kit - ou en pièces détachées. Ainsi, le radiateur 1 et ses pièces détachées peuvent être contenus dans un emballage de moindre encombrement. L'essieu 2 peut être préalablement fixé sur le châssis 12 ou se présenter également comme une pièce détachée. Lorsque l'essieu 2 est assemblé sur le châssis 12, l'utilisateur emboîte les moyeux 31, 32 à chacune des extrémités 21, 22 dudit essieu. L'utilisateur emboîte ensuite les roues 41, 42 sur chacun des moyeux 31, 32. L'utilisateur emboîte enfin les enjoliveurs 51, 52 sur chacune des roues 41, 42. Ces emboîtages sont effectués simplement et rapidement, sans aucun outillage. Cet assemblage essieu-moyeux-roues-enjoliveurs est relativement intuitif pour l'utilisateur. Toutefois, l'ordre de montage importe peu, l'utilisateur pouvant tout à fait envisager un montage enjoliveurs-roues-moyeux-essieu ou roues-moyeux-enjoliveurs-essieu.

## Revendications

1. Assemblage de roues de radiateur domestique, comprenant :
- un essieu (2) adapté pour être assemblé à un châssis (12) du radiateur (1), lequel essieu présente deux extrémités (21, 22),
- un moyeu (31, 32) monté à chacune des extrémités (21, 22) de l'essieu (2), chaque moyeu (31, 32) étant assemblé par emboîtage élastique sur une extrémité respective (21, 22) dudit essieu (2),
- une roue (41, 42) montée sur chacun des moyeux (31, 32), chaque roue (41, 42) étant assemblée par emboîtage élastique sur le moyeu respectif (31, 32) **se caractérisant par le fait que :**
- l'essieu (2) est attaché rigidement au châssis (12) après assemblage,
- chaque moyeu (31, 32) est attaché rigidement à l'essieu (2) après emboîtage,
- chaque roue (41, 42) est mobile en rotation autour du moyeu (31, 32) respectif après emboîtage.

2. Assemblage selon la revendication 1, dans lequel :
- l'essieu (2) se présente sous la forme d'un rail plat longitudinal pourvu d'un trou d'encliquetage (231, 232) aménagé au niveau de chacune de ses extrémités (21, 22),
- chaque moyeu (31, 32) comprend un détrompeur formant glissière à l'intérieur duquel se loge une extrémité respective (21, 22) de l'essieu (2),
o le détrompeur est pourvu d'un organe d'encliquetage (331) qui s'emboîte élastiquement dans le trou d'encliquetage (231) lorsque l'extrémité (21, 22) de l'essieu (2) est logée dans ledit détrompeur.

3. Assemblage selon la revendication 2, dans lequel :
- chaque moyeu (31, 32) comprend un tube creux (310) autour duquel est assemblée la roue respective (41, 42),
- le détrompeur est délimité par un agencement de parois (312) qui s'étendent à l'intérieur du tube creux (310).

4. Assemblage selon l'une des revendications 2 ou 3, dans lequel :
- chaque moyeu (31, 32) comprend un tube creux (310) autour duquel est assemblée la roue respective (41, 42) et à l'intérieur duquel est aménagé le détrompeur,
- le tube creux (310) présente deux extrémités : une première extrémité ouverte (3100) par laquelle l'extrémité respective (21, 22) de l'essieu (2) s'insère dans le détrompeur, et une seconde extrémité (3101) obturée par une paroi qui délimite le fond dudit détrompeur,
- l'organe d'encliquetage (331) adapté pour s'emboîter élastiquement dans le trou d'encliquetage (231) du rail formant l'essieu (2), est solidaire de la paroi de fond.

5. Assemblage selon l'une des revendications 2 à 4, dans lequel le rail formant l'essieu (2) présente une âme longitudinale (200) dont chacun des bords longitudinaux est pourvu d'une aile (201, 202), de sorte que ledit rail a une section transversale en forme de U.

6. Assemblage selon la revendication 5, dans lequel l'âme (200) présente une platine de fixation (203) du châssis (12) du radiateur (1).

7. Assemblage selon l'une des revendications précédentes, dans lequel :
- l'essieu (2) se présente sous la forme d'un rail plat longitudinal métallique,
- chaque moyeu (31, 32) comprend un tube creux (310) en plastique autour duquel est assemblée la roue respective (41, 42) et dans lequel est aménagé un détrompeur formant glissière à l'intérieur duquel se loge une extrémité respective (21, 22) de l'essieu (2),
- le tube creux (310) présente deux extrémités :
o une première extrémité ouverte (3100) qui délimite l'amorce du détrompeur et par laquelle l'extrémité respective (21, 22) de l'essieu (2) s'insère,
o et une seconde extrémité (3101) obturée par une paroi qui délimite le fond du détrompeur,
- chaque extrémité respective (21, 22) de l'essieu (2) pénètre sur toute la longueur du tube creux (310), depuis la première extrémité ouverte (3100) jusqu'à la seconde extrémité (3101) obturée.

8. Assemblage selon l'une des revendications précédentes, dans lequel :
- chaque moyeu comprend un tube (310) délimité par une paroi cylindrique autour de laquelle est assemblée la roue respective (41, 42), ladite paroi cylindrique présentant une face externe,
- au moins une patte flexible (341) est aménagée au niveau de la face externe de la paroi cylindrique, laquelle patte est pourvue d'un élément d'encliquetage (3410),
∘ l'élément d'encliquetage (3410) fait saillie au-delà de la face externe de la paroi cylindrique lorsque la patte flexible (341) n'est pas sollicitée,
∘ la patte flexible (341) est adaptée pour s'escamoter dans la paroi cylindrique,
- chaque roue (41, 42) présente un alésage axial (410) qui s'insère autour de la paroi cylindrique du moyeu respectif (31, 32),
- l'élément d'encliquetage (3410) de la patte flexible (341) est conformé de manière à :
∘ provoquer l'escamotage de la patte flexible (341) dans la paroi cylindrique lors de l'insertion de l'alésage axial (410) autour de ladite paroi cylindrique,
∘ venir en butée contre une bordure (4101) de l'alésage axial (410) de la roue (41) lorsque ledit alésage est inséré autour de la paroi cylindrique, empêchant le démontage de ladite roue du moyeu respectif (31, 32).

9. Assemblage selon l'une des revendications précédentes, dans lequel :
- chaque moyeu comprend un tube (310) délimité par une paroi cylindrique autour de laquelle est assemblée la roue respective (41, 42), ladite paroi cylindrique présentant une face externe,
- le tube creux (310) présente deux extrémités : une première extrémité ouverte (3100) dans laquelle s'emboîte élastiquement une extrémité respective (21, 22) de l'essieu (2), et une seconde extrémité (3101) par laquelle s'emboîte la roue respective (41, 42),
∘ la première extrémité (3100) présente une collerette radiale (35) qui s'étend depuis la face externe de la paroi cylindrique,
- chaque roue (41, 42) présente un alésage axial (410) qui s'insère autour de la paroi cylindrique du moyeu respectif (31, 32), la collerette radiale (35) empêchant l'insertion dudit alésage axial au-delà de la première extrémité (3100).

10. Assemblage selon la revendication 9, dans lequel la collerette radiale (35) est circulaire et présente un diamètre qui est supérieur au diamètre externe de la roue (41, 42), ladite collerette étant pourvue d'une bande de protection (350) qui recouvre en partie ladite roue lorsque celle-ci est assemblée au moyeu respectif (31, 32).

11. Assemblage selon la revendication 10, dans lequel le tube (310), la collerette (35) et la bande de protection (350) se présentent sous la forme d'une pièce monobloc obtenue par moulage plastique.

12. Assemblage selon l'une des revendications précédentes, dans lequel un enjoliveur (51, 52) est assemblé par emboîtage élastique sur chacune des roues (41, 42).

13. Radiateur électrique domestique d'appoint comportant un châssis (12) et des roues (41, 42), **se caractérisant par le fait que** lesdites roues sont assemblées sur ledit châssis au moyen d'un assemblage conforme à l'une des revendications précédentes.

## Patentansprüche

1. Zusammenbau der Rollen eines Haushaltsheizkörpers, der Folgendes beinhaltet:
- eine Achse (2), die dazu ausgelegt ist, an einem Gestell (12) des Heizkörpers (1) befestigt zu werden, wobei die Achse zwei Enden (21, 22) aufweist,
- eine Nabe (31, 32), die an jedem der Enden (21, 22) der Achse (2) montiert ist, wobei jede Nabe (31, 32) durch elastisches Einschnappen an einem jeweiligen Ende (21, 22) der Achse (2) befestigt wird,
- eine Rolle (41, 42), die an jeder der Naben (31, 32) montiert ist, wobei jede Rolle (41, 42) durch elastisches Einschnappen an der jeweiligen Nabe (31, 32) befestigt wird,
**dadurch gekennzeichnet, dass:**
- die Achse (2) nach dem Zusammenbau starr an dem Gestell (12) angebracht ist,
- jede Nabe (31, 32) nach dem Einschnappen starr an der Achse (2) angebracht ist,
- jede Rolle (41, 42) nach dem Einschnappen um die jeweilige Nabe (31, 32) drehbar ist.

2. Zusammenbau nach Anspruch 1, wobei:
- die Achse (2) die Form einer flachen Längsschiene aufweist, die im Bereich von jedem ihrer Enden (21, 22) mit einem Einrastloch (231, 232) versehen ist,
- jede Nabe (31, 32) eine Unverwechselbarkeitseinrichtung beinhaltet, die eine Führungsschiene bildet und innerhalb derer ein jeweiliges Ende (21, 22) der Achse (2) zu liegen kommt,
∘ die Unverwechselbarkeitseinrichtung mit einem Einrastorgan (331) versehen ist, das elastisch in das Einrastloch (231) einschnappt, wenn das Ende (21, 22) der Achse (2) in der Unverwechselbarkeitseinrichtung zu liegen kommt.

3. Zusammenbau nach Anspruch 2, wobei:
- jede Nabe (31, 32) ein hohles Rohr (310) beinhaltet, um das die jeweilige Rolle (41, 42) befestigt wird,
- die Unverwechselbarkeitseinrichtung durch eine Anordnung von Wänden (312), die sich im Inneren des hohlen Rohrs (310) erstrecken, begrenzt wird.

4. Zusammenbau nach einem der Ansprüche 2 oder 3, wobei:
- jede Nabe (31, 32) ein hohles Rohr (310) beinhaltet, um das die jeweilige Rolle (41, 42) befestigt wird und innerhalb dessen sich die Unverwechselbarkeitseinrichtung befindet,
- das hohle Rohr (310) zwei Enden aufweist: ein erstes offenes Ende (3100), durch das das jeweilige Ende (21, 22) der Achse (2) in die Unverwechselbarkeitseinrichtung geführt wird, und ein zweites Ende (3101), das durch eine Wand verschlossen ist, die die Rückseite der Unverwechselbarkeitseinrichtung begrenzt,
- das Einrastorgan (331), das dazu ausgelegt ist, elastisch in das Einrastloch (231) der Schiene, die die Achse (2) bildet, einzuschnappen, mit der Rückwand fest verbunden ist.

5. Zusammenbau nach einem der Ansprüche 2 bis 4, wobei die Schiene, die die Achse (2) bildet, eine Längsstrebe (200) aufweist, wobei jede ihrer Längskanten mit einem Flügel (201, 202) versehen ist, sodass die Schiene einen U-förmigen Querschnitt aufweist.

6. Zusammenbau nach Anspruch 5, wobei die Strebe (200) eine Platte (203) zur Befestigung des Gestells (12) des Heizkörpers (1) aufweist.

7. Zusammenbau nach einem der vorhergehenden Ansprüche, wobei:
- die Achse (2) die Form einer flachen Längsschiene aus Metall aufweist,
- jede Nabe (31, 32) ein hohles Kunststoffrohr (310) aufweist, um das die jeweilige Rolle (41, 42) befestigt wird und in dem sich eine Unverwechselbarkeitseinrichtung befindet, die eine Führungsschiene bildet und innerhalb derer ein jeweiliges Ende (21, 22) der Achse (2) zu liegen kommt,
- das hohle Rohr (310) zwei Enden aufweist:
∘ ein erstes offenes Ende (3100), das den Anfang der Unverwechselbarkeitseinrichtung begrenzt und durch das das jeweilige Ende (21, 22) der Achse (2) geführt wird,
∘ und ein zweites Ende (3101), das durch eine Wand verschlossen ist, die den Boden der Unverwechselbarkeitseinrichtung begrenzt,
- jedes jeweilige Ende (21, 22) der Achse (2) über die gesamte Länge des hohlen Rohrs (310) eindringt, von dem ersten offenen Ende (3100) bis zu dem zweiten verschlossenen Ende (3101).

8. Zusammenbau nach einem der vorhergehenden Ansprüche, wobei:
- jede Nabe ein Rohr (310) beinhaltet, das durch eine zylindrische Wand begrenzt wird, um die die jeweilige Rolle (41, 42) befestigt wird, wobei die zylindrische Wand eine Außenseite aufweist,
- mindestens eine flexible Lasche (341) im Bereich der Außenseite der zylindrischen Wand eingerichtet ist, wobei die Lasche mit einem Einrastmittel (3410) versehen ist,
∘ das Einrastelement (3410) über die Außenseite der zylindrischen Wand hinaus vorsteht, wenn die flexible Lasche (341) nicht beansprucht wird,
∘ die flexible Lasche (341) dazu ausgelegt ist, in der zylindrischen Wand zu verschwinden,
- jede Rolle (41, 42) eine axiale Bohrung (410) aufweist, die um die zylindrische Wand der jeweiligen Nabe (31, 32) geführt wird,
- das Einrastelement (3410) der flexiblen Lasche (341) für Folgendes ausgeformt ist:
∘ Bewirken des Verschwindens der flexiblen Lasche (341) in der zylindrischen Wand beim Führen der axialen Bohrung (410) um die zylindrische Wand,
∘ Anstoßen gegen einen Rand (4101) der axialen Bohrung (410) der Rolle (41), wenn die Bohrung um die zylindrische Wand geführt wird, wodurch die Demontage der Rolle von der jeweiligen Nabe (31, 32) verhindert wird.

9. Zusammenbau nach einem der vorhergehenden Ansprüche, wobei:
- jede Nabe ein Rohr (310) beinhaltet, das durch eine zylindrische Wand begrenzt wird, um die die jeweilige Rolle (41, 42) befestigt wird, wobei die zylindrische Wand eine Außenseite aufweist,
- das hohle Rohr (310) zwei Enden aufweist: ein erstes offenes Ende (3100), in das ein jeweiliges Ende (21, 22) der Achse (2) elastisch einschnappt, und ein zweites Ende (3101), an dem die jeweilige Rolle (41, 42) einschnappt,
∘ wobei das erste Ende (3100) einen radialen Bund (35) aufweist, der sich von der Außenseite der zylindrischen Wand erstreckt,
- jede Rolle (41, 42) eine axiale Bohrung (410) aufweist, die um die zylindrische Wand der jeweiligen Nabe (31, 32) geführt wird, wobei der radiale Bund (35) das Führen der axialen Bohrung über das erste Ende (3100) hinaus verhindert.

10. Zusammenbau nach Anspruch 9, wobei der radiale Bund (35) kreisförmig ist und einen Durchmesser aufweist, der größer als der Außendurchmesser der Rolle (41, 42) ist, wobei der Bund mit einer Schutzleiste (350) versehen ist, die die Rolle teilweise abdeckt, wenn diese an der jeweiligen Nabe (31, 32) befestigt wird.

11. Zusammenbau nach Anspruch 10, wobei das Rohr (310), der Bund (35) und die Schutzleiste (350) die Form eines einstückigen Teils, das durch Kunststoffverformung erhalten wird, aufweisen.

12. Zusammenbau nach einem der vorhergehenden Ansprüche, wobei eine Radkappe (51, 52) durch elastisches Einschnappen an jeder der Rollen (41, 42) befestigt wird.

13. Elektrischer Zusatzhaushaltsheizkörper, der ein Gestell (12) und Rollen (41, 42) umfasst, **dadurch gekennzeichnet, dass** die Rollen mit Hilfe eines Zusammenbaus nach einem der vorhergehenden Ansprüche an dem Gestell befestigt werden.

## Claims

1. Domestic radiator wheel assembly, comprising:
- an axle (2) adapted to be assembled on a chassis (12) of the radiator (1), which axle has two ends (21, 22),
- a hub (31, 32) mounted at each of the ends (21, 22) of the axle (2), each hub (31, 32) being assembled by elastic fitting on a respective end (21, 22) of said axle (2),
- a wheel (41, 42) mounted on each of the hubs (31, 32), each wheel (41, 42) being assembled by elastic fitting on the respective hub (31, 32),
**characterized in that:**
- the axle (2) is rigidly attached to the chassis (12) after assembly,
- each hub (31, 32) is rigidly attached to the axle (2) after fitting,
- each wheel (41, 42) is rotatable about the respective hub (31, 32) after fitting.

2. Assembly according to Claim 1, in which:
- the axle (2) takes the form of a flat longitudinal rail provided with a snap-fastening hole (231, 232) formed at each of its ends (21, 22),
- each hub (31, 32) comprises a poka-yoke forming a slide inside which there is housed a respective end (21, 22) of the axle (2),
o the poka-yoke is provided with a snap-fastening member (331) which fits elastically in the snap-fastening hole (231) when the end (21, 22) of the axle (2) is housed in said poka-yoke.

3. Assembly according to Claim 2, in which:
- each hub (31, 32) comprises a hollow tube (310) around which the respective wheel (41, 42) is assembled,
- the poka-yoke is delimited by an arrangement of walls (312) which extend inside the hollow tube (310) .

4. Assembly according to either of Claims 2 and 3, in which:
- each hub (31, 32) comprises a hollow tube (310) around which the respective wheel (41, 42) is assembled and inside which the poka-yoke is arranged,
- the hollow tube (310) has two ends: a first open end (3100) through which the respective end (21, 22) of the axle (2) is inserted into the poka-yoke, and a second end (3101) closed off by a wall which delimits the bottom of said poka-yoke,
- the snap-fastening member (331) adapted to fit elastically into the snap-fastening hole (231) in the rail forming the axle (2) is secured to the bottom wall.

5. Assembly according to one of Claims 2 to 4, in which the rail forming the axle (2) has a longitudinal web (200), each of the longitudinal edges of which is provided with a flange (201, 202), with the result that said rail has a U-shaped cross section.

6. Assembly according to Claim 5, in which the web (200) has a fastening plate (203) for fastening the chassis (12) of the radiator (1).

7. Assembly according to one of the preceding claims, in which:
- the axle (2) takes the form of a flat longitudinal metal rail,
- each hub (31, 32) comprises a hollow tube (310) made of plastic around which the respective wheel (41, 42) is assembled and in which there is arranged a poka-yoke forming a slide inside which a respective end (21, 22) of the axle (2) is housed,
- the hollow tube (310) has two ends:
∘ a first open end (3100) which delimits the start of the poka-yoke and through which the respective end (21, 22) of the axle (2) is inserted,
∘ and a second end (3101) closed off by a wall which delimits the bottom of the poka-yoke,
- each respective end (21, 22) of the axle (2) penetrates over the whole length of the hollow tube (310) from the first open end (3100) to the second closed-off end (3101).

8. Assembly according to one of the preceding claims, in which:
- each hub comprises a tube (310) delimited by a cylindrical wall around which the respective wheel (41, 42) is assembled, said cylindrical wall having an outer face,
- at least one flexible tab (341) is formed at the outer face of the cylindrical wall, which tab is provided with a snap-fastening element (3410),
∘ the snap-fastening element (3410) projects beyond the outer face of the cylindrical wall when the flexible tab (341) is not stressed,
∘ the flexible tab (341) is adapted to retract into the cylindrical wall,
- each wheel (41, 42) has an axial bore (410) which is inserted around the cylindrical wall of the respective hub (31, 32),
- the snap-fastening element (3410) of the flexible tab (341) is configured so as:
∘ to cause the flexible tab (341) to retract into the cylindrical wall during the insertion of the axial bore (410) around said cylindrical wall,
∘ to butt against an edge (4101) of the axial bore (410) of the wheel (41) when said bore is inserted around the cylindrical wall, preventing said wheel from being demounted from the respective hub (31, 32).

9. Assembly according to one of the preceding claims, in which:
- each hub comprises a tube (310) delimited by a cylindrical wall around which the respective wheel (41, 42) is assembled, said cylindrical wall having an outer face,
- the hollow tube (310) has two ends: a first open end (3100) in which a respective end (21, 22) of the axle (2) fits elastically, and a second end (3101) via which the respective wheel (41, 42) is fitted,
∘ the first end (3100) has a radial collar (35) which extends from the outer face of the cylindrical wall,
- each wheel (41, 42) has an axial bore (410) which is inserted around the cylindrical wall of the respective hub (31, 32), the radial collar (35) preventing the insertion of said axial bore beyond the first end (3100).

10. Assembly according to Claim 9, in which the radial collar (35) is circular and has a diameter which is greater than the outer diameter of the wheel (41, 42), said collar being provided with a protective strip (350) which partly covers said wheel when the latter is assembled on the respective hub (31, 32).

11. Assembly according to Claim 10, in which the tube (310), the collar (35) and the protective strip (350) take the form of an integral part obtained by plastic moulding.

12. Assembly according to one of the preceding claims, in which a hubcap (51, 52) is assembled by elastic fitting on each of the wheels (41, 42).

13. Top-up domestic electric radiator comprising a chassis (12) and wheels (41, 42), **characterized in that** said wheels are assembled on said chassis by means of an assembly according to one of the preceding claims.
